# EUROPÄISCHE PATENTSCHRIFT

(11) **EP 3 921 450 B1**
(45) Veröffentlichungstag und Bekanntmachung des Hinweises auf die Patenterteilung: **15.02.2023**
(21) Anmeldenummer: 20710862.2
(22) Anmeldetag: 05.03.2020
(51) Int. Cl.: C22C 38/00, C22C 38/04, C22C 38/22, C22C 38/24, C22C 38/26, C22C 38/30, C22C 38/32, F01D 25/24, F16B 23/00

(54) **BEFESTIGUNGSMITTEL FÜR EIN TURBINEN- ODER VENTILGEHÄUSE**
FASTENER FOR A VALVE OR TURBINE HOUSING
MOYEN DE FIXATION POUR UN LOGEMENT DE TURBINE OU DE SOUPAPE

(30) Priorität: 02.04.2019 EP 19166719
(43) Veröffentlichungstag der Anmeldung: 15.12.2021
(73) Patentinhaber: Siemens Aktiengesellschaft, 80333 München (DE)
(72) Erfinder: HAAN, Johanna Marie, 45481 Mülheim a. d. Ruhr (DE); KERN, Torsten-Ulf, 46485 Wesel (DE)
(86) Internationale Anmeldenummer: PCT/EP2020/055887
(87) Internationale Veröffentlichungsnummer: WO 2020/200634

(56) Entgegenhaltungen:
- EP-A1- 1 681 359
- EP-A1- 1 754 798
- DE-A1-102017 215 250

## Beschreibung

Die Erfindung betrifft ein Befestigungsmittel zum Verbinden eines ersten Gehäuseteils einer Dampf- oder Gasturbine mit einem zweiten Gehäuseteil der Dampf- oder Gasturbine.

Die Erfindung betrifft ferner ein Turbinengehäuse für eine Dampf- oder Gasturbine mit einem ersten Gehäuseteil und einem zweiten Gehäuseteil sowie einem derartigen Befestigungsmittels zum Verbinden der beiden Gehäuseteile in einem flanschartigen Teilfugenbereich der Gehäuseteile.

Ferner betrifft die Erfindung ein Ventilgehäuse.

Darüber hinaus betrifft die Erfindung eine Turbine für ein thermisches Kraftwerk mit einem derartigen Turbinengehäuse.

Unter Turbinengehäuse wird hier das Innengehäuse der Dampf- oder Gasturbine verstanden, das in der Regel von einem Außengehäuse umgeben ist.

Beim Betrieb einer Dampfturbine werden möglichst hohe Dampfzustände angestrebt. Das heißt es wird angestrebt, die Dampfturbine bei möglichst hohen Dampfdrücken mit sehr hohen Dampftemperaturen zu betreiben. Dabei werden zur Verbindung zweier Gehäuseteile der Dampfturbine eingesetzte Schrauben als Ausführungsform eines Befestigungsmittels hohen Spannungen bei gleichzeitig herrschenden hohen Temperaturen ausgesetzt. Im Stand der Technik werden diese Schrauben daher aus hochwarmfestem Werkstoff gefertigt. Dabei werden Legierungen unterschiedlicher Zusammensetzungen als Schraubenwerkstoff verwendet. Die im Stand der Technik verwendeten Schrauben sind jedoch lediglich bei Turbinengehäusen verwendbar, die auf relativ geringe Druckdifferenzen von weniger als 250 bar ausgelegt sind. Auf höhere Druckdifferenzen ausgelegte Dampfturbinen sind teilweise mit speziellen einteiligen Einströmgehäusen ohne Verschraubung versehen. Bei anderen im Stand der Technik bekannten Dampfturbinen ist ein häufiges Schraubennachziehen und damit ein Öffnen der Turbine schon nach relativ kurzer Betriebszeit, nämlich eventuell schon nach 30000 Stunden anstatt 100.000 Stunden Betriebszeit notwendig.

Befestigungsmittel aus verschiedenen zusammengesetzten Materialien sind in den Dokumenten EP 1 681 359 A1, EP 1 754 798 A1 und DE 10 2017 215250 A1 offenbart.

Eine der Erfindung zugrundeliegende Aufgabe besteht darin, eine Turbine mit einem Befestigungsmittel dahingehend zu verbessern, dass das Befestigungsmittel auch bei hohen Druckdifferenzen, insbesondere bei Druckdifferenzen von über 250 bar sowie hohen Temperaturen des Strömungsmediums zum Verbinden eines ersten Gehäuseteils mit einem zweiten Gehäuseteil der Turbine eingesetzt werden kann.

Diese Aufgabe ist erfindungsgemäß mit einem gattungsgemäßen Befestigungsmittel gemäß den Merkmalen des Anspruchs 1 gelöst.

Die Aufgabe ist ferner mit einem Turbinengehäuse für eine Dampf- oder Gasturbine gelöst, das mit einem derartigen erfindungsgemäßen Befestigungsmittel versehen ist.

Darüber hinaus ist die Aufgabe mit einer Turbine für ein thermisches Kraftwerk mit einem derartigen Turbinengehäuse gelöst.

Der Grundwerkstoff ist derart ausgebildet, dass das Verhältnis von N/B (in Gewichts-%) zwischen 1,0 und 5,0 liegt.

Durch den Einsatz des erfindungsgemäßen Grundwerkstoffes weist das Befestigungsmittel eine derartige Festigkeit auf, dass sie bei hohen Druckdifferenzen von über 250 bar sowie hohen Temperaturen zur Verbindung zweier Gehäuseteile verlässlich verwendet werden kann. Wenn das Befestigungsmittel als Schraube ausgebildet ist, ist ein frühzeitiges Schraubennachziehen nicht notwendig. Der bei der erfindungsgemäßen Schraube als Ausführungsform des Befestigungsmittels verwendete Werkstoff weist im Vergleich mit im Stand der Technik bekannten Schraubenwerkstoffen höhere Ausgangsfestigkeit, höheren Schraubenanzug und somit höhere Relaxationsendspannungen auf. Die erfindungsgemäße Schraube ermöglicht den Bau einer K-Turbine (Kombination aus Hochdruck- und Mitteldruckturbinenzylinder in einem einzigen Gehäuse) für ultrasuperkritische Dampfzustände (300 bar/600°C). Auch beim Einsatz in anderen Dampfturbinen, wie etwa Hochdruck-, Mitteldruck-, oder eingehäusigen Mitteldruck- und Niederdruckdampfturbinen ergeben sich Verbesserungspotentiale in der Neuentwicklung.

In dem erfindungsgemäßen Grundwerkstoff der Legierung wird kein Wolfram eingesetzt, um zu vermeiden, dass während der Beaufschlagung eines Bauteils aus dem Grundwerkstoff/Legierung Ausscheidungen z.B. vom Typ Laves-Phase auftreten, die schnell wachsen können und die Stabilität des Gefüges insofern beeinflussen, dass die Zeitstandfestigkeit und die Relaxationsfestigkeit stark absinken.

Zusätzlich ändert sich mit der Ausscheidung W-haltiger neuer Phasen die Verformungsfähigkeit des Grundwerkstoff/ Legierung, so dass an Radien, Kerben und Übergängen die Gefahr von Anrissen entsteht und damit ein Bauteil im Betrieb gefährdet wird.

Die Einstellung des auf die Grundmatrixzusammensetzung abgestimmten N/B-Verhältnisses ist essentiell, um die Langzeiteigenschaften im Ausgangszustand einzustellen und über lange Zeiten bei höher Temperatur aufrechtzuerhalten. Das Ziel ist die Bereitstellung von ausreichend N für die Ausscheidung von V- oder Nb-Nitriden des Typs MX und M2X für die Matrixstabilität, und von B für die Unterdrückung des Wachstums von Kohlenstoff haltigen M23C6-Ausscheidungen bei Zeit- und Temperaturbeaufschlagung.

Da B und N auch eine hohe chemische Affinität zueinander haben und bei ungünstigen N/B-Verhältnissen grobe BN-Ausscheidungen entstehen können, stehen dann N und B nicht mehr für die Langzeitfestigkeit des Gefüges zur Verfügung. Die groben BN-Ausscheidungen haben keine festigkeitssteigernde Wirkung mehr, das Grundgefüge wird dadurch wesentlich geschwächt. Das Befestigungsmittel kann als Schraube oder als Stiftschraube ausgebildet sein. Ferner kann das Befestigungsmittel als Mutter oder als Überwurfmutter ausgebildet sein.

In bevorzugter Ausführungsform ist das Befestigungsmittel als Teilfugenschraube ausgebildet, die das erste Gehäuseteil mit dem zweiten Gehäuseteil in einem flanschartigen Teilfugenbereich verbindet. Die Teilfugenschraube kann als Bolzenschraube oder auch als durchgehende Schraube ausgeführt sein.

Um die Festigkeit des Befestigungsmittels bei hohen Dampfzuständen zu gewährleisten, ist es vorteilhaft, wenn der Werkstoff des Befestigungsmittels im Temperaturbereich von 400°C bis 650°C festigkeitsoptimiert ist, insbesondere mit einer Festigkeit Rpo, 2 bei Raumtemperatur von mindestens 700 MPa qualifiziert ist. D.h., die Dehngrenze einer plastischen Verformung von 0,2% wird beim Werkstoff des Befestigungsmittels erst bei Beanspruchung von 700 MPa bei Raumtemperatur erreicht. Eine Schraubenvorspannung kann zusätzlich zu Erhöhung der Relaxationsendspannung als Variable berücksichtigt werden.

Um insbesondere die vorgenannten Materialparameter, wie etwa die angestrebte Festigkeit bei 400°C bis 650°C zu erreichen, ist es vorteilhaft, wenn die Herstellung des Befestigungsmittels die folgenden Schritte umfasst: Erschmelzen der Werkstoffbestandteile, Vorwärmebehandeln und Weiterverarbeiten der Schmelze zum Rundprofil sowie Vergütungsbehandeln des Rundprofils mit Anlassparametern von T ≤ 720°C. Bei der Erschmelzung ist es vorteilhaft, ESU-Stahl zu verwenden und durchgreifend zu verschmieden. Die Vergütungsbehandlung wird vorzugsweise als Ölvergütung ausgeführt. Über die gesamte Außenfläche des Befestigungsmittels sollte eine vollständige Umwandlung in der Martensitstufe erfolgen. Die Abschrecktemperatur sollte zwischen 1050°C und 1120°C liegen. Vorteilhafterweise kann eine zweifache Anlassbehandlung durchgeführt werden, wobei dann folgendes zu beachten ist: Für das erste Anlassen wird zweckmäßigerweise eine Temperatur von 570°C verwendet. Die Temperatur der zweiten Anlassbehandlung sollte über der der ersten Anlassbehandlung liegen.

In zweckmäßiger Ausführungsform weist das Befestigungsmittel den Werkstoff X13CrMoCoVNbNB9-2-1 auf. Insbesondere besteht das Befestigungsmittel zu 100% aus diesem Werkstoff. Durch Verwendung dieses Werkstoffs wird das Befestigungsmittel bezüglich seiner Festigkeit bei hohen Dampftemperaturen verbessert, sodass es zum Verbinden zweier Gehäuseteile einer entsprechenden Dampfturbine bei hohen Dampfzuständen optimal geeignet ist.

Ein Werkstoff mit einer derartigen Zusammensetzung weist verbesserte Eigenschaften bezüglich Festigkeit, Zugfestigkeit, Dehnung, Einschnürung und Zeitstandfestigkeit auf. Damit verbessert sich die Eignung des aus diesem Werkstoff gefertigten Befestigungsmittels zur Verbindung zweier Gehäuseteile einer mit hohen Dampfzuständen beaufschlagten Dampfturbine entsprechend.

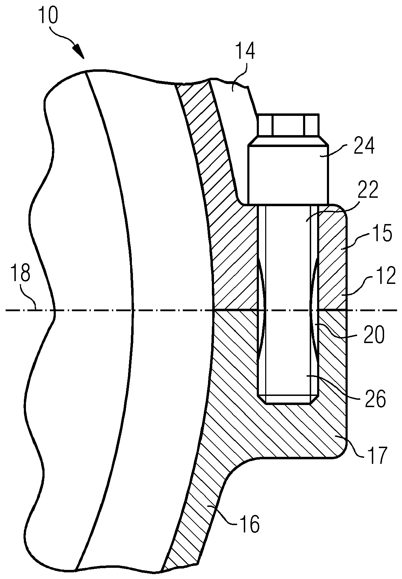

Die oben beschriebenen Eigenschaften, Merkmale und Vorteile dieser Erfindung sowie die Art und Weise, wie diese erreicht werden, werden klarer und deutlicher verständlich im Zusammenhang mit der Zeichnung näher erläutert werden.

Ein Ausführungsbeispiel der Erfindung wird nachfolgend anhand der Zeichnung beschrieben. Diese soll das Ausführungsbeispiel nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Diese zeigt eine Schnittansicht eines flanschartigen Teilfugenbereichs eines Turbinengehäuses mit einer Teilfugenschraube.

Die Figur zeigt einen Ausschnitt eines Turbinengehäuses 12 einer Dampfturbine 10 im Bereich einer Teilfuge 18. Mit Turbinengehäuse 12 ist hier das Innengehäuse der Dampfturbine 10 bezeichnet, das von einem Außengehäuse umgeben ist.

Die Erfindung kann auch für ein Ventilgehäuse eingesetzt werden.

Das Turbinengehäuse 12 weist ein oberes oder erstes Gehäuseteil 14 und ein unteres oder zweites Gehäuseteil 16 auf. Die Teilfuge 18 befindet sich zwischen dem ersten Gehäuseteil 14 und dem zweiten Gehäuseteil 16. Im Bereich der Teilfuge 18 ist das erste Gehäuseteil 14 und das zweite Gehäuseteil 16 flanschartig ausgebildet. Ein Gehäuseflansch 15 des ersten Gehäuseteils 14 sowie ein Gehäuseflansch 17 des zweiten Gehäuseteils 16 sind mit einer Schraubenbohrung 20 mit Innengewinde versehen.

Die Schraubenbohrung 20 ist zur Aufnahme einer Teilfugenschraube 22 ausgebildet. Die Teilfugenschraube 22 ist eine Ausführungsform eines Befestigungsmittels 22. Weitere Ausführungsformen des Befestigungsmittels 22 wären Stiftschrauben oder Muttern, insbesondere Überwurfmuttern. Dabei erstreckt sich die Schraubenbohrung 20 vollständig durch den Gehäuseflansch 15 des ersten Gehäuseteils 14 und teilweise in dem Gehäuseflansch 17 des zweiten Gehäuseteils 16. Die Teilfugenschraube 22 kann von oben her d.h. von der Oberseite des Gehäuseflansches 15 des ersten Gehäuseteils 14 her in die Schraubenbohrung 20 eingeschraubt werden. Die Teilfugenschraube 22 ist in dem vorliegenden Beispiel als Sechskantschraube ausgeführt und weist einen Schraubenkopf 24 sowie einen Schraubenschaft 26 mit einem an das Innengewinde der Schraubenbohrung 20 angepassten Außengewinde auf. In der in der Figur gezeigten vollständig in die Schraubenbohrung 20 eingeschraubten Stellung der Teilfugenschraube 22 stellt diese eine feste Verbindung zwischen dem ersten Gehäuseteil 14 und dem zweiten Gehäuseteil 16 über die jeweiligen Gehäuseflansche 15 und 17 her. Die Teilfugenschraube 22 kann neben der in der Figur gezeigten Gestaltungsform auch in verschiedenen anderen Gestaltungsformen ausgeführt sein. Zum Beispiel kann die Teilfugenschraube 22 auch als Bolzenschraube mit entsprechenden Schraubenmuttern an ihren jeweiligen Stirnseiten ausgebildet sein.

Die Teilfugenschraube 22 ist aus einem Grundwerkstoff ausgebildet.

Die chemische Zusammensetzung des Grundwerkstoffes der Teilfugenschraube 22 weist folgende chemische Elemente auf:
C: 0,10 bis 0,17 Gewichts-%,
Mn: 0,20 bis 0,60 Gewichts-%,
Cr: 8,0 bis 11,0 Gewichts-%,
Mo: 1,0 bis 2,0 Gewichts-%,
Co: 0,50 bis 2,00 Gewichts-%,
N: 0,010 bis 0,050 Gewichts-%,
B: 0,005 bis 0,015 Gewichts-%,
V: 0,10 bis 0,30 Gewichts-%,
Al: höchstens 0,010 Gewichts-%,
Nb: 0,02 bis 0,08 Gewichts-%,
Ni: 0,10 bis 0,50 Gewichts-%,
Si: höchstens 0,10 Gewichts-%,
P: höchstens 0,010 Gewichts-%,
S: höchstens 0,005 Gewichts-%,
Fe: Rest.

Der Grundwerkstoff ist derart ausgebildet, dass das Verhältnis von N/B (in Gewichts-%) zwischen 1,0 und 5,0 liegt.

Die Schraube (22) weist den Werkstoff X13CrMoCoVNbNB9-2-1, insbesondere besteht die Schraube zu 100% aus diesem Werkstoff.

Der Grundwerkstoff der Schraube (22) ist im Temperaturbereich von 400°C bis 650°C festigkeitsoptimiert, insbesondere mit einer Festigkeit Rpo,2 von mindestens 700 MPa bei Raumtemperatur qualifiziert.

Die nichtbeanspruchte Herstellung der Schraube (22) umfasst folgende Schritte:
Erschmelzen der Werkstoffbestandteile, Vorwärmebehandeln und Weiterverarbeiten der Schmelze zum Rundprofil sowie Vergütungsbehandeln des Rundprofils mit Anlassparametern von T ≤ 720 °C.
C = Kohlenstoff, Mn = Mangan, Cr = Chrom, Mo = Molybdän,
Co = Cobalt, N = Stickstoff, B = Bor, V = Vanadium,
Al= Aluminium, Nb = Niob, Ni = Nickel, Si = Silizium,
P = Phosphor, S = Schwefel, Fe = Eisen, W = Wolfram.

## Patentansprüche

1. Befestigungsmittel (22) zum Verbinden eines ersten Gehäuseteils (14) einer Dampf- oder Gasturbine (10) mit einem zweiten Gehäuseteil (16) der Dampf- oder Gasturbine (10),
wobei das Befestigungsmittel (22) aus einem Grundwerkstoff ausgebildet ist,
wobei der Grundwerkstoff folgende Zusammensetzung aufweist:
C: 0,10 bis 0,17 Gewichts-%,
Mn: 0,20 bis 0,60 Gewichts-%,
Cr: 8,0 bis 11,0 Gewichts-%,
Mo: 1,0 bis 2,0 Gewichts-%,
Co: 0,50 bis 2,00 Gewichts-%,
N: 0,010 bis 0,050 Gewichts-%,
B: 0,005 bis 0,015 Gewichts-%,
V: 0,10 bis 0,30 Gewichts-%,
Al: höchstens 0,010 Gewichts-%,
Nb: 0,02 bis 0,08 Gewichts-%,
Ni: 0,10 bis 0,50 Gewichts-%,
Si: höchstens 0,10 Gewichts-%,
P: höchstens 0,010 Gewichts-%,
S: höchstens 0,005 Gewichts-%,
Fe: Rest,
**dadurch gekennzeichnet, dass**
der Grundwerkstoff derart ausgebildet ist, dass das Verhältnis von N/B in Gewichts-% zwischen 1,0 und 5,0 liegt.

2. Befestigungsmittel (22) nach Anspruch 1,
wobei der Grundwerkstoff 0,5 bis 1,5 Gew.-% Co aufweist und höchstens 5 Gew.-% W aufweist.

3. Befestigungsmittel (22) nach Anspruch 1 oder 2, wobei das Befestigungsmittel (22) als Schraube (22) ausgebildet ist.

4. Befestigungsmittel (22) nach Anspruch 1 oder 2,
wobei das Befestigungsmittel (22) als Überwurfmutter zum Verbinden zweier Bauteile ausgebildet ist.

5. Befestigungsmittel (22) nach einem der vorhergehenden Ansprüche,
wobei das Befestigungsmittel (22) als Teilfugenschraube (22) ausgebildet ist, die das erste Gehäuseteil (14) mit dem zweiten Gehäuseteil (16) in einem flanschartigen Teilfugenbereich verbindet (15, 17).

6. Befestigungsmittel (22) nach einem der vorhergehenden Ansprüche, wobei der Grundwerkstoff im Temperaturbereich von 400°C bis 650°C derart festigkeitsoptimiert ist, dass der Grundwerkstoff mit einer Festigkeit Rpo,2 von mindestens 700 MPa bei Raumtemperatur qualifiziert ist.

7. Befestigungsmittel (22) nach einem der vorhergehenden Ansprüche,
wobei das Befestigungsmittel (22) den Werkstoff X13CrMoCoVNbNB9-2-1 aufweist, insbesondere zu 100% daraus besteht.

8. Turbinengehäuse für eine Dampf- oder Gasturbine mit einem ersten Gehäuseteil (14) und einem zweiten Gehäuseteil (16) sowie einem Befestigungsmittel (22) nach einem der vorhergehenden Ansprüche zum Verbinden der beiden Gehäuseteile (14, 16) in einem flanschartigen Teilfugenbereich (15, 17) der Gehäuseteile (14, 16).

9. Ventilgehäuse für eine Dampf- oder Gasturbine, wobei das Ventilgehäuse eine Ventilgehäuse-Oberteil und ein Ventilgehäuse-Unterteil aufweist sowie ein Befestigungsmittel (22) nach einem der Ansprüche 1 bis 7 zum Verbinden des Ventilgehäuse-Oberteils mit dem Ventilgehäuse-Unterteils.

10. Turbine für ein thermisches Kraftwerk mit einem Turbinengehäuse nach Anspruch 8.

11. Turbine für ein thermisches Kraftwerk mit einem Ventilgehäuse nach Anspruch 9.

12. Turbine für ein thermisches Kraftwerk mit einem Turbinengehäuse nach Anspruch 8 und einem Ventilgehäuse nach Anspruch 9.

## Claims

1. Fastening means (22) for connecting a first housing part (14) of a steam or gas turbine (10) to a second housing part (16) of the steam or gas turbine (10),
wherein the fastening means (22) is formed from a base material, wherein the base material has the following composition:
C: 0.10 to 0.17% by weight,
Mn: 0.20 to 0.60% by weight,
Cr: 8.0 to 11.0% by weight,
Mo: 1.0 to 2.0% by weight,
Co: 0.50 to 2.00% by weight,
N: 0.010 to 0.050% by weight,
B: 0.005 to 0.015% by weight,
V: 0.10 to 0.30% by weight,
Al: at most 0.010% by weight,
Nb: 0.02 to 0.08% by weight,
Ni: 0.10 to 0.50% by weight,
Si: at most 0.10% by weight,
P: at most 0.010% by weight,
S: at most 0.005% by weight,
Fe: remainder,
**characterized in that**
the base material is formed such that the ratio of N/B in % by weight is between 1.0 and 5.0.

2. Fastening means (22) according to Claim 1,
wherein the base material comprises 0.5 to 1.5% by weight of Co and at most 5% by weight of W.

3. Fastening means (22) according to Claim 1 or 2,
wherein the fastening means (22) is in the form of a bolt (22).

4. Fastening means (22) according to Claim 1 or 2,
wherein the fastening means (22) is in the form of a union nut for connecting two components.

5. Fastening means (22) according to one of the preceding claims,
wherein the fastening means (22) is in the form of a housing-joint bolt (22) which connects the first housing part (14) to the second housing part (16) in a flange-like housing-joint region (15, 17).

6. Fastening means (22) according to one of the preceding claims, wherein the base material is optimized in terms of strength in the temperature range of from 400°C to 650°C such that the base material is qualified with a strength Rp 0.2 of at least 700 MPa at room temperature.

7. Fastening means (22) according to one of the preceding claims,
wherein the fastening means (22) consists of the material X13CrMoCoVNbNB9-2-1, in particular consists up to 100% thereof.

8. Turbine housing for a steam or gas turbine, having a first housing part (14) and a second housing part (16) and a fastening means (22) according to one of the preceding claims for connecting the two housing parts (14, 16) in a flange-like housing-joint region (15, 17) of the housing parts (14, 16).

9. Valve housing for a steam or gas turbine, wherein the valve housing has a valve housing top part and a valve housing bottom part and a fastening means (22) according to one of Claims 1 to 7 for connecting the valve housing top part to the valve housing bottom part.

10. Turbine for a thermal power plant, having a turbine housing according to Claim 8.

11. Turbine for a thermal power plant, having a valve housing according to Claim 9.

12. Turbine for a thermal power plant, having a turbine housing according to Claim 8 and a valve housing according to Claim 9.

## Revendications

1. Moyen (22) de fixation pour la liaison d'une première partie (14) de l'enveloppe d'une turbine (10) à vapeur ou à gaz à la deuxième partie (16) de l'enveloppe de la turbine (10) à vapeur ou à gaz,
dans lequel le moyen (22) de fixation est constitué d'un matériau de base,
dans lequel le matériau de base a la composition suivante :
C : de 0,10 à 0,17 % en poids,
Mn : de 0,20 à 0,60 % en poids,
Cr : de 8,0 à 11,0 % en poids,
Mo : de 1,0 à 2,0 % en poids,
Co : de 0,50 à 2,00 % en poids,
N : de 0,010 à 0,050 % en poids,
B : de 0,005 à 0,015 % en poids,
V : de 0,10 à 0,30 % en poids,
Al : au plus 0,010 % en poids,
Nb : de 0,02 à 0,08 % en poids,
Ni : de 0,10 à 0,50 % en poids,
Si : au plus 0,10 % en poids,
P : au plus 0,010 % en poids,
S : au plus 0,005 % en poids,
Fe : reste,
**caractérisé en ce que**
le matériau de base est constitué de manière à ce que le rapport de N/B en pourcentage en poids soit compris entre 1,0 et 5,0.

2. Moyen (22) de fixation suivant la revendication 1,
dans lequel le matériau de base a de 0,5 à 1,5 % en poids de Co et au plus 5 % en poids de W.

3. Moyen (22) de fixation suivant la revendication 1 ou 2, dans lequel le moyen (22) de fixation est constitué sous la forme d'une vis (22) .

4. Moyen (22) de fixation suivant la revendication 1 ou 2, dans lequel le moyen (22) de fixation est constitué sous la forme d'un écrou à chapeau de liaison de deux pièces.

5. Moyen (22) de fixation suivant l'une des revendications précédentes,
dans lequel le moyen (22) de fixation est constitué sous la forme d'une vis (22) de joint partiel, qui relie (15, 17) la première partie (14) de l'enveloppe à la deuxième partie (16) de l'enveloppe dans une partie de joint partiel du type à bride.

6. Moyen (22) de fixation suivant l'une des revendications précédentes, dans lequel le matériau de base est optimisé en résistance dans une plage de température comprise entre 400°C et 650°C, de manière à ce que le matériau de base soit qualifié par une résistance Rpo,2 d'au moins 700 MPa à la température ambiante.

7. Moyen (22) de fixation suivant l'une des revendications précédentes,
dans lequel le matériau (22) de fixation a le matériau X13CrMoCoVNbNB9-2-1, en en étant notamment constitué à 100 %.

8. Enveloppe d'une turbine à vapeur ou d'une turbine à gaz comprenant une première partie (14) de l'enveloppe et une deuxième partie (16) de l'enveloppe, ainsi qu'un moyen (22) de fixation suivant l'une des revendications précédentes pour relier les deux parties (14, 16) de l'enveloppe dans une région (15, 17) de joint partiel du type à bride des parties (14, 16) de l'enveloppe.

9. Corps de soupape pour une turbine à vapeur ou une turbine à gaz, dans lequel le corps de la soupape a une partie supérieure et une partie inférieure ainsi qu'un moyen (22) de fixation suivant l'une des revendications 1 à 7 pour relier la partie supérieure à la partie inférieure du corps de la soupape.

10. Turbine d'une centrale thermique comprenant une enveloppe de turbine suivant la revendication 8.

11. Turbine d'une centrale thermique comprenant un corps de soupape suivant la revendication 9.

12. Turbine d'une centrale thermique comprenant une enveloppe de turbine suivant la revendication 8 et un corps de soupape suivant la revendication 9.
